# EUROPÄISCHE PATENTANMELDUNG

(11) **EP 3 691 084 A1**
(43) Veröffentlichungstag der Anmeldung: **05.08.2020**
(21) Anmeldenummer: 19154225.7
(22) Anmeldetag: 29.01.2019
(51) Int. Cl.: H02K 1/14, H02K 1/18, F16B 5/02, F16B 35/00, H02K 7/18

(54) **FIXIERUNG VON STATORSEGMENTEN**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft einen Stator (4) eines direktangetriebenen Windkraftgenerators mit in Umfangsrichtung betrachtet angeordneten Statorsegmenten (5), die jeweils an insbesondere zwei parallel verlaufend angeordneten Flanschen (8) eines gemeinsamen Statorträgers (6) positioniert sind,
wobei die Flansche (8) des Statorträgers (6) Bohrungen (12) aufweisen,
wobei jedes Statorsegment (5) über zumindest zwei Fixationsvorrichtungen (18) mit den Flanschen (8) fixiert ist,
wobei das Statorsegment (5) einen Segmentträger (7) aufweist, der Ausnehmungen (11) vorsieht, in die ein Bohrungsteil (17) einsetzbar ist,
wobei eine Fixationsvorrichtung (18) ein Bohrungsteil (17), einen Passstift (13), und zumindest ein Unterlegplättchen (15) aufweist,
wobei über das in der Ausnehmung (11) befindliche Bohrungsteil (17) und die Bohrung (12) des Statorträgers (6) eingesetzte Passstift (13) und das Unterlegplättchen (15) das Statorsegment (5) positionier- und fixierbar ist.

## Beschreibung

Die Erfindung betrifft einen Stator einer direkt angetriebenen Windkraftanlage als auch ein Verfahren zur Montage und Positionierung von Statorsegmenten einer derartigen Windkraftanlage.

Statoren von direkt angetriebenen Windkraftgeneratoren sind aufgrund ihres Durchmessers größer 4 Meter aus in Umfangsrichtung betrachtet mehreren Statorsegmenten zusammengesetzt. Dies sind in der Regel sechs, acht oder zwölf Statorsegmente, die zu einem Ring zusammengebaut werden. In der Regel wird das Statorsegment an beiden axialen Enden fixiert. Aufgrund der Größe des Stators ist es schwierig, die geforderten Toleranzen einzuhalten. Bei der Herstellung der Statorsegmente und der Statorträger ist eine genaue Fertigung notwendig. Flexible Einstellungen in ihrer, insbesondere radialen Position zueinander, sind nicht möglich. Damit hängt der finale Außendurchmesser von exakten Fertigungen der Statorträger als auch der Statorsegmente ab. Dies fordert einen hohen Aufwand, was sehr kostenintensiv ist.

Ausgehend davon liegt der Erfindung die Aufgabe zugrunde, einen Stator bereitzustellen, der die oben genannten Nachteile vermeidet und bei dem, insbesondere der Luftspalt zwischen einem Stator und einem Rotor eines Windkraftgenerators einfach zu justieren und fixieren ist.

Die Lösung der gestellten Aufgabe gelingt durch einen Stator eines direktangetriebenen Windkraftgenerators mit in Umfangsrichtung betrachtet angeordneten Statorsegmenten, die jeweils an insbesondere zwei parallel verlaufend angeordneten Flanschen eines gemeinsamen Statorträgers positioniert sind, wobei die Flansche des Statorträgers Bohrungen aufweisen, wobei jedes Statorsegment über zumindest zwei Fixationsvorrichtungen mit den Flanschen fixiert ist,
wobei das Statorsegment einen Segmentträger aufweist, der Ausnehmungen vorsieht, in die ein Bohrungsteil einsetzbar ist,
wobei eine Fixationsvorrichtung ein Bohrungsteil, einen Passstift, und zumindest ein Unterlegplättchen aufweist,
wobei über das in der Ausnehmung befindliche Bohrungsteil und die Bohrung des Statorträgers eingesetzte Passstift und das Unterlegplättchen das Statorsegment positionier- und fixierbar ist.

Die Lösung der gestellten Aufgabe gelingt auch durch ein Verfahren zur Positionierung von Statorsegmenten eines Stators eines direkt angetriebenen Windkraftgenerators zur Erzielung eines gleichmäßigen Luftspalts zwischen dem Stator und einem Rotor durch folgende Schritte:
- Ansetzen eines Statorsegments an einen Statorträger mittels einer Montagehilfsvorrichtung,
- Positionierung des Statorsegments bezüglich des Statorträgers,
- Einsetzens eines Bohrungsteils im Bereich einer dafür vorgesehenen Ausnehmung des Segmentträgers des Statorsegments,
- Einsetzen eines Passstiftes in die axial fluchtende Bohrung von Flansch des Statorträgers und Bohrung des Bohrungsteils des Segmentträgers und einer anschließenden genaueren Positionierung des Statorsegments mittels einer Unterlegscheibe in einem Spalt zwischen oberem Rand des Bohrungsteils und radial oberem Rand der Ausnehmung,
- wiederholen dieser Schritte an diesem Statorsegment an weiteren Fixationspunkten und Fixationspunkten der weiteren Statorsegmente bis die Statorsegmente die erforderliche Position bzgl. des Rotors eingenommen haben.

Um nunmehr insbesondere die radiale Positionierung des Statorsegments flexibel und positionsgenau gestalten zu können, ist erfindungsgemäß nun eine genaue Justierung des Segmentträgers bzgl. des oder der Flansche des Statorträgers möglich. Durch Wahl der Dicke des oder der Unterlegplättchen, kann der Segmentträger an dem Fixationspunkt dementsprechend positionsgenau eingestellt werden. Der Passstift, auch als Zylinderstift bezeichnet, wird mit seinem Übermaß bzgl. der Bohrungen in die nunmehr axial fluchtenden Ausnehmungen vorzugsweise des Bohrungsteils und der Bohrung des Flansches eingesetzt. Somit werden Flansch des Statorträgers und Segmentträger durch den Passstift miteinander verbunden.

Vorteilhafterweise wird dabei jedes Statorsegment an den parallelen Flanschen des Statorträgers fixiert, so dass jedes Statorsegment vier Fixationspunkte mit dem Statorträger aufweist.

Selbstverständlich sind auch nur zwei oder drei Fixationspunkte pro Statorsegment möglich, deren Anordnung am Segmentträger unter Berücksichtigung u.a. von statischen Gesichtspunkten zu wählen ist.

Ebenso kann das Statorsegment mit zwei oder drei Fixationspunkten an einem Statorträger befestigt sein, der nur einen Flansch aufweist. Dabei ist dann das Statorsegment mit einem im Wesentlichen axial mittig angeordneten Segmentträger ausgestattet.

Prinzipiell wird nunmehr die Position des Statorsegments radial, bzw. genaugenommen quasi radial verschoben. Je nach Dicke des Unterlegplättchens ist die Verschiebung mehr oder weniger stark ausgeprägt. Damit lassen sich nun unvermeidbare Fertigungstoleranzen des Statorsegments und deren Komponenten (Segmentträger, Blechpaket...) ausgleichen, um einen möglichst gleichmäßigen Luftspalt zwischen Stator und Rotor zu erreichen.

Eine exakte Positionierung wird nunmehr mittels eines Bohrungsteils, eines Passstifts und eines Unterlegplättchens vorgenommen. Durch eine Montagehilfsvorrichtung wird die ideale Position des Fixationspunktes, also des Statorsegments an der vorbestimmten Stelle des Statorträgers herbeigeführt. In einer Ausnehmung des Segmentträgers wird das Bohrungsteil eingesetzt. Die Bohrung im Bohrungsteil und die Bohrung im Flansch des Statorträgers, sind dabei axial fluchtend ausgerichtet. Durch Wahl der Dicke des Unterlegplättchens, das in den verbleibenden Zwischenraum zwischen Oberkante Bohrungsteil und Oberkante der Ausnehmung im Segmentträger eingesetzt wird, ist das Statorsegment positioniert und wird durch den Passstift fixiert.

Eine zusätzliche Fixierung kann durch eine Knebelschraube herbeigeführt werden, die Bohrungsteil und Unterlegplättchen am Segmentträger zusätzlich fixiert.

Mit der Knebelschraube kann auch eine Vorpositionierung des Bohrungsteils vorgenommen werden. Vorab wird die Position des Segmentträgers mit Hilfe der Montagevorrichtung in der gewünschten Position gehalten. Mit Hilfe der Knebelschraube und dem Unterlegplättchen wird das Bohrungsteils so ausgerichtet, dass der Passstift einsetzbar ist. Durch das Bohrungsteil und das Unterlegplättchen wird nunmehr die Position des Segmentträgers an diesem Fixationspunkt bzgl. des Statorträgers gehalten und durch das axiale Einsetzen des Passstiftes in die axial fluchtenden Bohrungen des Bohrungsteils und der Bohrung im Flansch des Statorträgers fixiert.

Erfindungsgemäß erlaubt diese Herstellart und Montageart von Statorsegmenten am Statorträger größere Herstellungstoleranzen der einzelnen Komponenten, die letztlich durch kleiner und leichter herzustellender Teile ausgleichbar sind.

Grundsätzlich läuft das Verfahren folgendermaßen ab:
Vorab wird die Position des Segmentträgers des Statorsegments mit Hilfe der Montagevorrichtung in der gewünschten Position gehalten. Dabei wird jeder Fixationspunkt eines Statorsegments positioniert. Wenn ein Statorsegment positioniert und wie oben beschrieben fixiert ist, werden mittels der Montagehilfsvorrichtung beim benachbarten Statorsegment dieselben Schritte wiederholt.

Ebenso ist es möglich, dass eine Montagehilfsvorrichtung zwei oder mehrere oder gar alle für den Stator erforderlichen Statorsegmente vorhält.

Die Erfindung sowie weitere vorteilhafte Ausgestaltungen der Erfindung werden anhand prinzipiell dargestellter Ausführungsbeispielen näher erläutert. Darin zeigen:
- FIG 1: eine prinzipielle Windkraftanlage,
- FIG 2: einen Ausschnitt eines Statorsegments an einem Statorträger,
- FIG 3: ein Statorsegment,
- FIG 4: eine prinzipiell dargestellte Herstellungsweise eines Stators,
- FIG 5,6: einen Fixationspunkt,
- FIG 7: ein Bohrungsteil,
- FIG 8: ein Passstift,
- FIG 9: eine Knebelschraube,
- FIG 10: unterschiedlich dicke Unterlegplättchen,

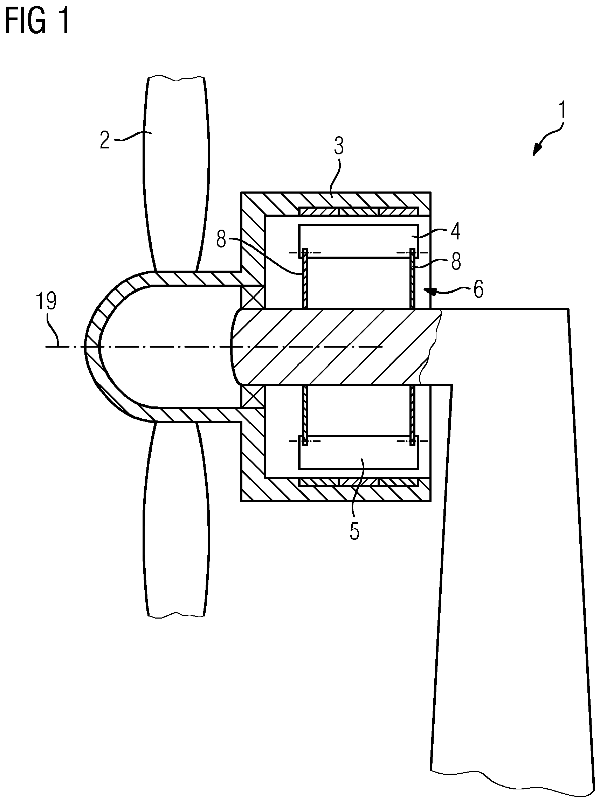

FIG 1 zeigt eine prinzipielle Darstellung einer Windkraftanlage 1 mit einem direkt angetriebenen Windkraftgenerator mit einem Außenläufer. Ein Rotor 3 weist dabei nicht näher dargestellte Permanentmagnete auf, die mit einem in dieser Darstellung nicht näher dargestellten Wicklungssystem eines Stators 4 elektromagnetisch wechselwirken und somit aufgrund der Rotation der Turbine 2 der Windkraftanlage 1 um eine Achse 19 elektrische Energie bereitstellen. Der Stator 4 ist in Umfangsrichtung betrachtet in Statorsegmente 5 aufgeteilt, die sich jeweils an einem Statorträger 6 abstützen, der zwei parallel verlaufende Flansche 8 aufweist.

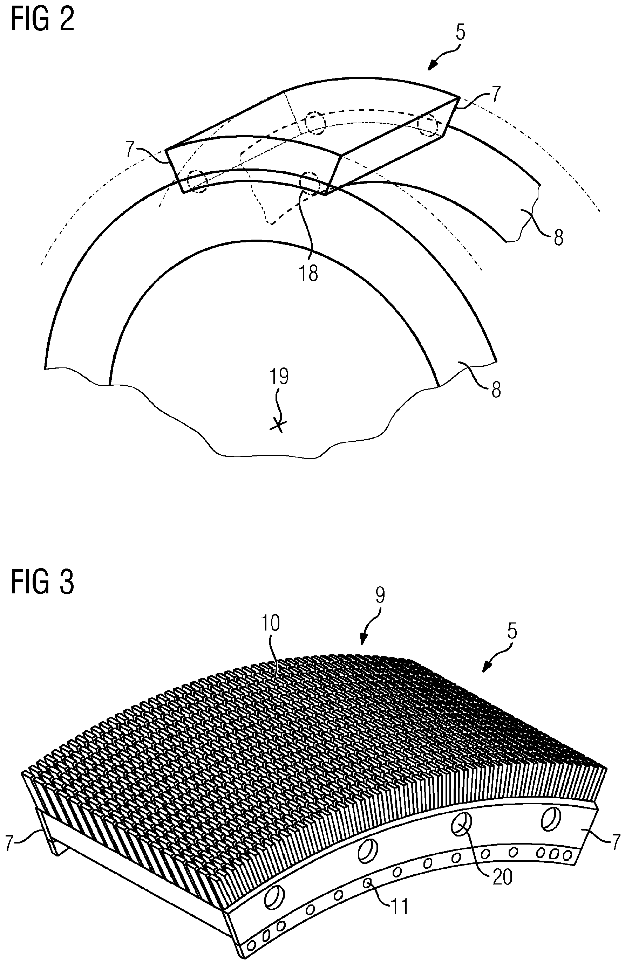

Wie FIG 2 näher darstellt, ist ein Statorsegment 5 mit in dieser Darstellung vier Fixationspunkten 18 durch eine geeignete Fixiervorrichtung, wie sie noch näher beschrieben wird, am Statorträger 6 befestigt.

Ein Statorsegment 5 weist ein Blechpaket 9 auf, das achsparallele Nuten 10 aufweist, in denen ein nicht näher dargestelltes Wicklungssystem angeordnet und fixiert wird. Dieses Blechpaket 9 wird durch Segmentträger 7 axial begrenzt und zusammengehalten. Über die Segmentträger 7 wird nunmehr am radial inneren Bereich ein Statorsegment 5 am Statorträger 6 befestigt.

FIG 3 zeigt in einer perspektivischen Darstellung ein Statorsegment 5 mit Segmentträgern 7, die das Blechpaket 9 fixieren und halten. Die Segmentträger 7 sind am radial inneren Bereich mit Ausnehmungen 11 versehen, über die letztlich das Statorsegment 5 am Statorträger 6 fixiert wird.

Durchbrüche 20 im Segmentträger 7 zwischen dem radial inneren Bereich und dem Blechpaket 9 ermöglichen im Betrieb der Windkraftanlage eine im Wesentlichen axiale Luftströmung im Bereich der Statorsegmente 5 und damit des Stators 4. Dies bildet zumindest einen Teil einer Luftkühlung des Stators 4 und damit des Windkraftgenerators.

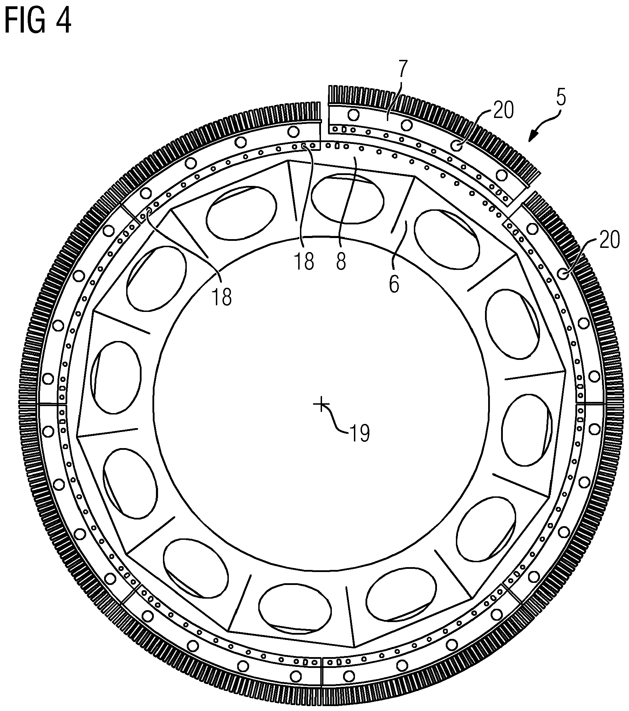

FIG 4 zeigt prinzipiell, wie die Statorsegmente 5 an einem Statorträger 6 mittels Verbindungen von Flansch 8 des Statorträgers 6 und Segmentträgers 7 des Statorsegments 5 zueinander ausgerichtet, positioniert und danach fixiert werden.

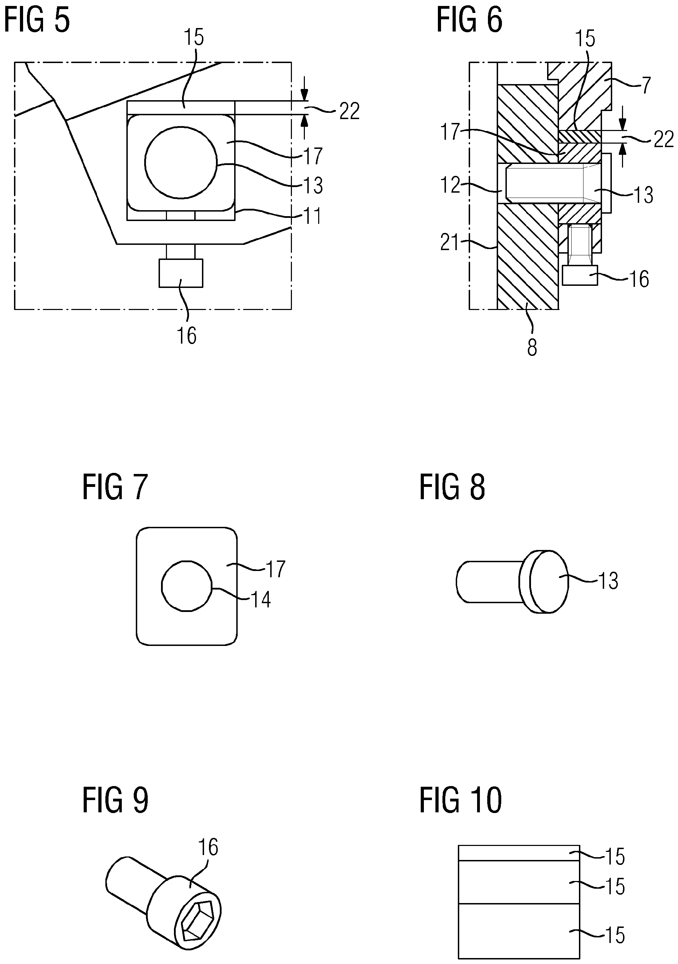

FIG 5 zeigt in einer Detaildarstellung einen Fixationspunkt 18, wobei die Fixiervorrichtung mehrere Teile aufweist. Zum einen die Ausnehmung 11 des Segmentträgers 8, in die ein Bohrungsteil 17 einsetzbar ist, das eine mittige Bohrung 14 aufweist, in die ein Passstift 13 einsetzbar ist.

Eine exakte Positionierung des Statorsegments 5 wird nunmehr mittels des Bohrungsteils 17 (gemäß FIG 7), eines Passstifts 13 (gemäß FIG 8) und zumindest eines Unterlegplättchens 15 (gemäß FIG 10) vorgenommen. Durch eine nicht näher dargestellte Montagehilfsvorrichtung wird die ideale, vorbestimmte Position des Fixationspunktes 18, also des Statorsegments 5 an der vorbestimmmten Stelle des Statorträgers 6 herbeigeführt. In einer Ausnehmung 11 des Segmentträgers 7 befindet sich das Bohrungsteil 17. Die Bohrung im Bohrungsteil 17 und die Bohrung im Flansch 8 des Statorträgers 6, sind dabei axial fluchtend ausgerichtet. Durch Wahl der Dicke des Unterlegplättchens 15, das in den verbleibenden Spalt 22 zwischen Oberkante Bohrungsteil 17 und Oberkante der Ausnehmung 11 im Segmentträger 7 eingesetzt wird, ist das Statorsegment 5, insbesondere in seiner radialen Position fixiert.

Der Passstift 13 weist ein leichtes Übermaß gegenüber der Bohrung 12 im Statorträger 6 und der Bohrung 14 im Bohrungsteil 17 im Segmentträger 7 auf. Es erfolgt somit mit dem Bohrungsteil 17 und dem Unterlegplättchen 15 mittels der Montagehilfsvorrichtung eine exakte Ausrichtung, Positionierung mit anschließender Fixierung mittels des Passstiftes 13. Durch Wiederholen dieser Schritte wird für das Statorsegment 5, als auch letztlich für den gesamten Stator 4 ein exakter Luftspalt zu einem Rotor 3 eingestellt.

Das Bohrungsteil 17 muss bezüglich der Ausnehmung 11 im Segmentträger 7 nicht exakt auf Maß gearbeitet sein. Falls toleranzbedingte Maßungenauigkeiten auftreten sollten, wird dies, insbesondere in quasi radialer Richtung durch das Unterlegplättchen 15 gemäß der FIG 5 übernommen.

Geringe Einstellmöglichkeiten lässt ebenso die Knebelschraube 16 gemäß FIG 9 zu, die radial aus Richtung Statorträger 6 in das Bohrungsteil 17 eindrehbar ist.

Ebenso eignet sich die Knebelschraube 16 als zusätzliche Montagehilfe während der Ausrichtung des Statorsegments 5. Dabei kann das Bohrungsteil 17 und/oder das Unterlegplättchen 15 während des Montagevorgangs positioniert oder geklemmt werden.

Der Passstift 13 kann auch durch eine Schraube ersetzt werden, die aus der abgewandten Seite 21 ragt. Damit kann mittels einer Mutter die Schraube gekontert werden, was eine eventuelle Demontage des Statorsegments 5 erleichtert.

## Patentansprüche

1. Stator (4) eines direktangetriebenen Windkraftgenerators mit in Umfangsrichtung betrachtet angeordneten Statorsegmenten (5), die jeweils an insbesondere zwei parallel verlaufend angeordneten Flanschen (8) eines gemeinsamen Statorträgers (6) positioniert sind,
wobei die Flansche (8) des Statorträgers (6) Bohrungen (12) aufweisen,
wobei jedes Statorsegment (5) über zumindest zwei Fixationsvorrichtungen (18) mit den Flanschen (8) fixiert ist,
wobei das Statorsegment (5) einen Segmentträger (7) aufweist, der Ausnehmungen (11) vorsieht, in die ein Bohrungsteil (17) einsetzbar ist,
wobei eine Fixationsvorrichtung (18) ein Bohrungsteil (17), einen Passstift (13), und zumindest ein Unterlegplättchen (15) aufweist,
wobei über das in der Ausnehmung (11) befindliche Bohrungsteil (17) und die Bohrung (12) des Statorträgers (6) eingesetzte Passstift (13) und das Unterlegplättchen (15) das Statorsegment (5) positionier- und fixierbar ist.

2. Stator (4) nach Anspruch 1, **dadurch gekennzeichnet, dass** die Fixationsvorrichtung an den äußeren Begrenzungen der Segmentträger (7) vorgesehen ist.

3. Stator (4) nach Anspruch 1 oder 2, **dadurch gekennzeichnet, dass** die Fixationsvorrichtungen achsparallele Passstifte (13) aufweisen.

4. Stator (4) nach einem der vorhergehenden Ansprüche, **dadurch gekennzeichnet, dass** die Passstifte (13) zumindest bezüglich einer im Flansch (8) des Statorträgers (6) vorhandenen Bohrung (23) ein Übermaß aufweisen.

5. Stator (4) nach einem der vorhergehenden Ansprüche, **dadurch gekennzeichnet, dass** eine Knebelschraube (16) zumindest das Unterlegplättchen (15) am Segmentträger (7) zusätzlich fixiert.

6. Verfahren zur Positionierung von Statorsegmenten (5) eines Stators (4) eines direkt angetriebenen Windkraftgenerators zur Erzielung eines gleichmäßigen Luftspalts zwischen dem Stator (4) und einem Rotor (3) durch folgende Schritte:
- Ansetzen eines Statorsegments (5) an einen Statorträger (6) mittels einer Montagehilfsvorrichtung,
- Positionierung des Statorsegments (5) bezüglich des Statorträgers (6),
- Einsetzens eines Bohrungsteils (17) im Bereich einer dafür vorgesehenen Ausnehmung (11) des Segmentträgers (7) des Statorsegments (6),
- Einsetzen eines Passstiftes (13) in die axial fluchtende Bohrung (12) von Flansch (8) des Statorträgers (6) und Bohrung (14) des Bohrungsteil (17) des Segmentträgers (7) und einer anschließenden genaueren Positionierung des Statorsegments (5) mittels einer Unterlegscheibe (15) in einem Spalt (22) zwischen oberem Rand des Bohrungsteils (17) und radial oberem Rand der Ausnehmung (11),
- wiederholen dieser Schritte an diesem Statorsegment (5) an weiteren Fixationspunkten (18) und Fixationspunkten (18) der weiteren Statorsegmente (5) bis die Statorsegmente (5) die erforderliche Position bzgl. des Rotors (3) eingenommen haben.
